**Europäisches Patentamt**

**European Patent Office**

**Office européen des brevets**

(11) Publication number: **0 160 318**

**B1**

## (12) EUROPEAN PATENT SPECIFICATION

(45) Date of publication of patent specification: **14.03.90**

(51) Int. Cl.⁵: **G 06 K 15/10, B 41 J 2/22**

(21) Application number: **85105384.3**

(22) Date of filing: **02.05.85**

(54) **Printing system for dot-matrix printer.**

(30) Priority: **02.05.84 JP 87803/84**

(43) Date of publication of application:
**06.11.85 Bulletin 85/45**

(45) Publication of the grant of the patent:
**14.03.90 Bulletin 90/11**

(84) Designated Contracting States:
**DE FR GB**

(56) References cited:
**DE-A-3 125 426**
**US-A-4 431 319**

(73) Proprietor: **Oki Electric Industry Company, Limited**
**7-12, Toranomon 1-chome Minato-ku**
**Tokyo 105 (JP)**

(72) Inventor: **Shimoyama, Norio Oki Electric Ind. Co., Ltd.**
**7-12, Toranomon 1-chome Minato-ku**
**Tokyo (JP)**
Inventor: **Yoshimura, Kohtaroh Oki Electric Ind. Co., Ltd.**
**7-12, Toranomon 1-chome Minato-ku**
**Tokyo (JP)**
Inventor: **Matsumura, Takeshi Oki Electric Ind. Co., Ltd.**
**7-12, Toranomon 1-chome Minato-ku**
**Tokyo (JP)**
Inventor: **Hatakeyama, Motonobu Oki Electric Ind. Co., Ltd.**
**7-12, Toranomon 1-chome Minato-ku**
**Tokyo (JP)**

(74) Representative: **Betten, Jürgen, Dipl.-Ing. et al**
**Patentanwälte Betten & Resch**
**Reichenbachstrasse 19**
**D-8000 München 5 (DE)**

# EP 0 160 318 B1

## Description

### Background of the invention

The present invention relates to a printing system for use in a dot-matrix printer.

The speed of printing in dot-matrix printers is determined by the repetitive cycle time of a dot printing head. For increasing the printing speed with print heads having limited printing capability, it has been conventional practice to skip or omit certain dots when printing a pattern or to use a font of dot patterns from which certain dots are removed. However, the conventional printing practice has been disadvantageous in that printed characters are of poor quality.

US—A—4 431 319 discloses an apparatus for serial data printing which prints on demand the same alphanumeric characters and symbols twice with a vertical distance between the first and second printing corresponding to half of the vertical pitch distance of the dots in the first printing in order to provide a high quality printed product.

### Summary of the invention

It is an object of the present invention to provide a printing system for a dot-matrix printer, which can perform high-speed printing and low-noise printing operations without substantially lowering the quality of printed characters, so that no high-speed font of dot patterns will be necessary.

According to the present invention as defined by claim 1, there is provided a printing apparatus for a dot-matrix printer for printing a dot-matrix character or graphic pattern with a print head having head pins. The printing apparatus includes a memory for storing data just printed by the head pins, a register for storing input data, a processing circuit for processing the stored data from the memory and the input data from the register so as to modify the input data by omitting a data corresponding to each head pin if a dot has just been printed by said head pin, and a print head driver for enabling the print head to print the modified input data.

The above and other objects, features and advantages of the present invention will become more apparent from the following description when taken in conjunction with the accompanying drawings in which a preferred embodiment of the present invention is shown by way of illustrative example.

### Brief description of the drawings

Figure 1 is a block diagram of a printing system according to the present invention;

Figure 2 is a block diagram of a processing circuit in the printing system of Figure 1;

Figure 3 is a timing chart of operation of a print head driven in a normal printing mode;

Figure 4 is a timing chart of operation of the print head driven in a dot-skip mode;

Figure 5 is a diagram showing a print head and a dot pattern printed by the print head in the normal printing mode; and

Figure 6 is a diagram illustrative of a dot pattern printed in the dot-skip mode.

### Description of the preferred embodiment

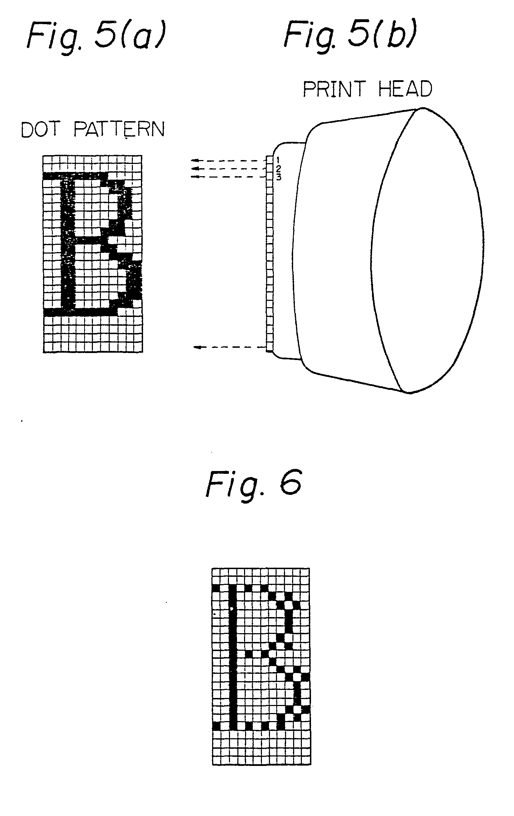

Figure 5 shows a print head of a dot-matrix printer and a letter "B" printed thereby in a normal printing mode. The print head has a vertical array of printing elements or head pins for printing one vertical column of dots at a time. The print head may have two vertical columns of printing elements or head pins which are staggered with respect to each other.

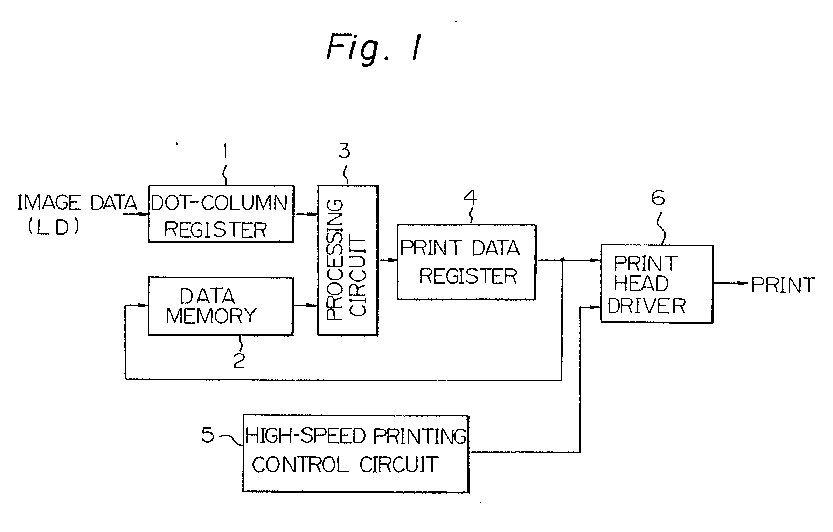

Figure 1 illustrates a printing system according to the present invention. Image data LD arranged in a pattern corresponding to the printing elements of the print head are stored in a dot-column register 1 as print data for one vertical column of dots. The print data for the previously printed vertical dot column are stored in a data memory 2. The data from the dot-column register 1 and the data from the data memory 2 are processed by a processing circuit 3 for each head pin in the manner described later, and the processed data are shifted as data to be printed into a print data register 4. In a high-speed printing mode, a high-speed printing control circuit 5 is enabled to drive a print head driver 6 to print the print data at a speed higher than a normal printing speed. The print data in the print data register 4 are stored into the data memory 2 for enabling the processing circuit 3 to process a next column of dots to be printed.

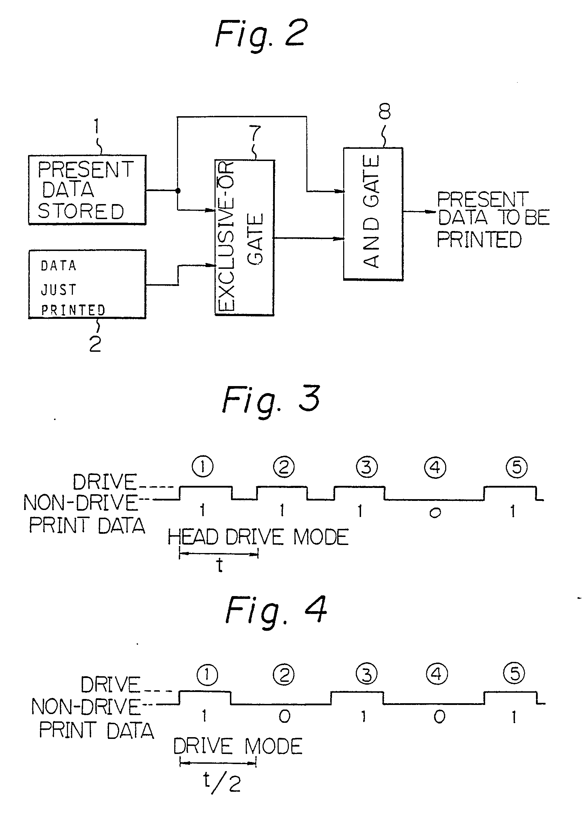

Figure 2 illustrates the processing circuit 3 in greater detail. The processing circuit 3 is composed of exclusive-OR gate 7 and an AND gate 8, for example, for preventing the print data item for each dot from being printed in any consecutive dot positions in the high-speed printing mode. More specifically, if the preceding data item for any head pin in the data memory 2 has been printed, the present data for the head pin is processed as data not to be printed regardless of the data stored in the dot-column register 1. When the preceding data item has not been printed, the data for the head pin is processed as data equal to the data stored in the dot-column register 1.

The following table shows present data to be printed resulting from combinations of data just printed and stored in the data memory 2 and present data stored in the dot-column register 1:

TABLE

| Data just printed | Present data stored | Present data to be printed |
|---|---|---|
| 1 | 1 | 0 |
| 1 | 0 | 0 |
| 0 | 1 | 1 |
| 0 | 0 | 0 |

1: Dot printed or to be printed,
0: Dot not printed or not to be printed

Figure 3 shows the period in which a desired print head pin is driven in a normal-speed printing mode. The illustrated period represents the limited capability of the print head, and governs the printing speed of the printer. Figure 4 shows that the data for second dot column is skipped and not printed in the high-speed printing mode according to the present invention.

Figure 6 illustrates a letter printed at a higher speed than the normal speed at which the letter is printed as shown in Figure 5. The letter printed in the high-speed printing mode can be printed at a speed twice higher than the normal speed, without substantially lowering the printing quality.

When not in the high-speed printing mode, the high-speed printing control circuit 5 is disabled, and desired data are printed in the normal-speed printing mode. The high-speed printing mode and the normal-speed printing mode can be selected by a DIP switch provided in the printer, or by a command signal from a master control device.

While the present invention has been described with respect to the high-speed printing mode, it is possible to employ the principle of the present invention in a normal-speed printing mode by eliminating the high-speed printing control circuit 5 and also by skipping or omitting certain dots, thereby reducing the printing density of printed letters and lowering the level of noise produced in the printing operation.

Although a certain preferred embodiment has been shown and described, it should be understood that many changes and modifications may be made therein without departing from the scope of the claims.

## Claims

1. A printing apparatus for a dot-matrix printer for printing a dot-matrix character or graphic pattern with a print head having head pins, said printing apparatus comprising:
a memory (2) for storing data just printed by said head pins;
a register (1) for storing input data; and
a print head driver (6) for enabling said print head to print a pattern derived from said input data; characterized by
a processing circuit (3) for processing said stored data from said memory (2) and said input data from said register (1) so as to modify said input data by omitting a data corresponding to each head pin if a dot has just been printed by said head pin; and by printing said modified input data.

2. A printing apparatus according to claim 1, including a printing speed control circuit (5) for controlling said print head driver (6) to print said modified input data selectively in high- and normal-speed printing modes.

3. A printing apparatus according to claim 1, wherein said processing circuit (3) comprises an exclusive-OR gate (7) and an AND gate (8) for processing said data just printed and said input data.

## Patentansprüche

1. Druckvorrichtung für einen Punktmatrixdrucker zum Drucken eines Punktmatrixschriftzeichens oder graphischen Musters mittels eines Druckkopfes mit Kopfnadeln, wobei diese Vorrichtung folgendes umfaßt:
einen Speicher (2) zum Speichern von mittels der Kopfnadeln soeben gedruckten Daten,
ein Register (1) zum Speichern von Eingabedaten, und einen Druckkopftreiber (6), der es dem Druckkopf ermöglicht, ein von den Einabedaten abgeleitetes Muster zu drucken, gekennzeichnet durch
eine Verarbeitungsschaltung (3) zum Verarbeiten der gespeicherten Daten aus dem Speicher (2) und der Eingabedaten aus dem Register (1) derart, daß die Eingabedaten modifiziert werden, indem Daten entsprechend einer jeden Kopfnadel unterdrückt werden, wenn ein Punkt von dieser Kopfnadel gerade gedruckt worden ist, und durch Drucken der modifizierten Eingabedaten.

2. Druckvorrichtung nach Anspruch 1, mit einer Druckgeschwindigkeits-Steuerschaltung (5) zum Steuern des Druckkopftreibers (6) derart, daß die modifizierten Eingabedaten selektiv im Hochgeschwindigkeits- und Normalgeschwindigkeits - Printmodus gedruckt werden.

3. Druckvorrichtung nach Anspruch 1, wobei die Verarbeitungsschaltung (3) ein EXKLUSIV-ODER-Gatter (7) und ein ODER-Gatter (8) umfaßt, um die gerade gedruckten Daten und die Eingabedaten zu verarbeiten.

**Revendications**

1. Appareil d'impression pour une imprimante en matrice de points pour l'impression d'un caractère ou d'un motif graphique en matrice de points au moyen d'une tête d'impression comportant des aiguilles de tête, ledit appareil d'impression comprenant:

une mémoire (2) destinée au stockage de données venant d'être imprimées par lesdites aiguilles de tête;

un registre (1) destiné à stocker des données d'entrée; et

un dispositif (6) d'entraînement de la tête d'impression destiné à permettre à ladite tête d'impression d'imprimer un motif dérivé desdites données d'entrée; caractérisé par

un circuit (3) de traitement destiné à traiter lesdites données stockées provenant de ladite mémoire (2) et lesdites données d'entrée provenant dudit registre (1) afin de modifier lesdites données d'entrée en supprimant une donnée correspondant à chaque aiguille de tête si un point vient juste d'être imprimé par ladite aiguille de tête; et en imprimant lesdites données d'entrée modifiées.

2. Appareil d'impression selon la revendication 1, comprenant un circuit (5) de réglage de la vitesse d'impression destiné à commander ledit dispositif (6) d'entraînement de la tête d'impression pour imprimer lesdites données d'entrée modifiées sélectivement dans des modes d'impression à vitesse élevée et à vitesse normale.

3. Appareil d'impression selon la revendication 1, dans lequel ledit circuit (3) de traitement comprend une porte OU-exclusif (7) et une porte ET (8) pour le traitement desdites données venant d'être imprimées et desdites données d'entrée.

4

# Fig. 1

## Fig. 2

PRESENT DATA STORED (1)

DATA JUST PRINTED (2)

EXCLUSIVE-OR GATE (7)

AND GATE (8)

PRESENT DATA TO BE PRINTED

## Fig. 3

DRIVE
NON-DRIVE
PRINT DATA

① 1 ② 1 ③ 1 ④ 0 ⑤ 1

HEAD DRIVE MODE

t

## Fig. 4

DRIVE
NON-DRIVE
PRINT DATA

① 1 ② 0 ③ 1 ④ 0 ⑤ 1

DRIVE MODE

t/2

## Fig. 5(a)

## Fig. 5(b)

DOT PATTERN

PRINT HEAD

## Fig. 6